Europäisches Patentamt

European Patent Office

Office européen des brevets

(19)

(11) Publication number: 0 149 459
A2

# (12) EUROPEAN PATENT APPLICATION

(21) Application number: 85100098.4

(22) Date of filing: 07.01.85

(51) Int. Cl.⁴: $A\ 01\ N\ 25/04$

(30) Priority: 18.01.84 IT 1921884

(43) Date of publication of application:
24.07.85 Bulletin 85/30

(84) Designated Contracting States:
AT BE CH DE FR GB LI LU NL SE

(71) Applicant: S.I.P.C.A.M. S.p.A. Società Italiana Prodotti
Chimici e per l'Agricoltura Milano
Viale Gian Galeazzo, 3
I-20136 Milano(IT)

(72) Inventor: Querzola, Giuseppe
Via Olmi, 7
I-20077 Melegnano (Milano)(IT)

(72) Inventor: Formigoni, Attilio
Via Pietro Micca, 1
I-20025 Legnano (Milano)(IT)

(72) Inventor: Epis, Gino
Viale Rimembranze, 37
Lodi (Milano)(IT)

(74) Representative: Vatti, Paolo, Dr. Ing. et al,
Fumero - Studio Consulenza Brevetti
Widenmayerstrasse 4/I
D-8000 München 22(DE)

(54) Stabilized fluid suspension of antiparasites in unchlorinated organic solvents and process for the preparation and use thereof.

(57) Stabilized antiparasitic fluid suspensions are prepared in unchlorinated organic solvents for mixing and/or milling of Chlorotriazine and/or herbicide substituted Ureas insoluble in such organic solvents, stabilizing the suspension with special pyrogenic micronized and/or hydrated and/or treated silica, possibly adjuvated by the presence of organophilic bentonites, together with emulsifiers and/or dispersing agents, with the possible presence of Acetanilides and/or herbicide substituted Nitroanilines, dissolved in the organic solvents used. These fluid suspensions are used for selective deweeding of agricultural crops and total deweeding of uncultivated areas.

EP 0 149 459 A2

"STABILIZED FLUID SUSPENSION OF ANTIPARASITES IN UNCHLORINATED ORGA-

NIC SOLVENTS AND PROCESS FOR THE PREPARATION AND USE THEREOF"

==0°0°0==

Fluid suspensions of antiparasitics are known since long. They are generally prepared as suspensions in aqueous means containing various adjuvants and stabilizers. But suspensions of chlorotriazine in chlorinated organic solvents are also known, in which herbicide acetanilides are dissolved , and, thanks to the high specific weight of these solvents, similar to that of the suspended chlorotriazine, they may be fluidly and stably obtained in these organic solvents, without the need for stabilizers and suspending agents.

With the present invention, it was unexpectedly found that a fluid suspension of chlorotriazine and/or herbicide substituted ureas may be prepared in unchlorinated organic solvents, if these suspensions are stabilized with special pyrogenic micronized and/or hydrated and/or treated silica, together with emulsifiers and/or dispersing agent, with the possible presence of acetanilides and/or herbicide substituted nitroanilines soluble in the organic solvents used. Organophilic bentonites may also be added to these stabilizing silica and act as adjuvants.

According to the invention, the following are some of the possible advantages:

1) Possibility of obtaining stable fluid suspensions, with stability of active substances normally unstable in aqueous suspension.

2) Possibility of mixing acetanilides and herbicide substituted nitroanilines, soluble in unchlorinated organic solvents and not water suspensible, with chlorotriazine and substituted ureas unsoluble but suspensible in such organic solvents.

3) Possibility of using, for these compositions, solvents with lower toxicity than chlorinated hydrocarbons, with equally high flashpoint. The silica suitable for use as stabilizers of fluid suspensions of antiparasitics in organic solvents are highly micronized silica, produced with various processes for physical or chemical treatment, to obtain pyrogenic and/or hydrated and/or treated silica with high suspensive capacity in unchlorinated organic solvents.

Examples of these special micronized silica, particularly useful according to the invention as stabilizers for fluid suspensions of antiparasitics in organic solvents are the following market products:

WACKER HDK N 20E        Wacker chemie GmbH

WACKER HDK N 20         Munich (R.F.T.)

WACKER HDK H 20

AEROSIL 200

AEROSIL R 972           Degussa AG. - Frankfurt

AEROSIL COK 84          (R.F.T.)

TIXOSIL 33 Y            Rhone Poulenc S.A. - Lyons

                        (France)

A particular case of the present invention foresees the use, together with the abovementioned stabilizing silica, of organophilic bentonites adjuvating the stabilizing effect of the fluid suspensions.

Examples of organophilic bentonites which may be used as adjuvants of these special silica are as follows:

BENTONE 27, BENTONE 34, BENTONE 38 produced by CECA, Velizy Villa Coublay (France).

Examples of unchlorinated organic solvents which may be used for fluid suspension according to the invention are as follows:

1) Aromatic hydrocarbons such as xylene, toluene, mixtures of aromatic solvents (e.g. Solvesso 150, Solvesso 200, Shellsol AB, Shellsol E, Shellsol R), monochlorobenzene, with boiling point between 100 and 300°C.

2) Aliphatic hydrocarbons, such as paraffinic solvents and paraffinic mineral oils, with boiling point between 90 and 400°C.

3) Vegetable oils, such as colza, soya, peanut, sunflower, cotton, corn oil.

- 3 -

0149459

4) Other unchlorinated aliphatic solvents such as aliphatic, aromatic and heterocyclic ketones (e.g. Cyclohexanone, isophoron, methylisobutylketone, N-methylpyrrolidone), or aliphaticesters (methyleleate for instance) or other unchlorinated solvents such as dimethylformamide.

Examples of emulsifiers usable in the fluid suspension in the invention are various emulsifying/dispersing surface-active agents, generally used in couple for the hydrophilic/hydrophobic balance (HLB), according to techniques well known to experts of the sector, a wide choice of which is available in the McCutcheon's - publication Detergent & Emulsifiers International Edition - 1982 annual Glen Rock (N.Y.) U.S.A.

In particular the following compounds with base of mixtures of ethoxylated alkylphenols or ethoxylated castor oil with dodecylbenzsulphonate proved suitable as emulsifiers/dispersing agents:

| SOITEM | 849 |
| SOITEM | 251 |
| SOITEM | 150 |
| SOITEM | 960 |
| SOITEM | 990 |
| SOITEM | 101 |

All products of SOITEM, Milan. Other useful emulsfiers/dispersants are the following:

ATLAS EL 522          ATLAS Europe of Ternate (Milan)

ATLAS EL 233

TEXAN L 250          SABO, Milan

Examples of antiparasitic active substances suitable for suspension in unchlorinated organic solvents according to the invention are the following herbicides, (I.S.O. nomenclature: see THE PESTICIDE MANUAL - 1983 - British Crop Protection Council):

a) Chlorotriazine: for example Atrazine, Simazine, Terbutylazine, Sec-butylazine, Propazine, Trietazine etc.;

b) <u>Urea substitutes</u>: for example Neburon, Diuron, Linuron, Monuron, Fenuron, Chloroxuron, Chlortoluron, Isoproturon, Metoxuron, Benzthiazuron, Metabenzthiazuron, Thiazfluron, Ethidimuron, etc.

Examples of herbicides suitable to be dissolved in unchlorinated organic solvents and associated to suspensions of solid antiparasitic substances in these organic solvents according to the invention are the following (I.S.O. nomenclature, see THE PESTICIDE MANUAL - 1983 - British Crop Protection Council, for the chemical compositions):

a) <u>Acetanilides</u>: for example Alachlor, Metolachlor, Acetochlor, Butachlor, Delachlor, Demethachlor, Metazachlor, Trimexachlor, Diethatyl etc.;

b) <u>Nitroanilines</u>: for example Trifluralin, Benfluralin, Isopropalin, Fluchloralin, Butralin, Ethalfluralin, Pendimethalin, Dinitramine etc.

According to the purpose to be achieved, the fluid suspension in the invention may contain one active substance or more in suspension, and none or one or more active substances in solution.

The fluid suspension according to the invention therefore has the following approximate composition:

Active substances in suspension (weight percentage):

2-60% (average 10-40%)

Active substances in solution:

0-60% (if present, average 5-35%)

Stabilizing silica:

0.5-10% (average 1.5-4%)

Emulsifiers/dispersing agents:

2-30% (average 6-15%)

Unchlorinated organic solvents:

Sufficient for 100 Kg.

The production process first involves the mixing, in special mixers for fluids, of the organic solvents with any active substances in solution, if required; the emulsifiers/dispersing agents and stabilizing silica are then dispersed by agitation and finally the solid active substances, already in fine powder, are added to be put in suspension. If the solid active substances in suspension do not possess a fineness under 20 micron, it is advisable to mill the fluid suspension in a sand (or pearl) mill in such a way that all the solid particles in suspension have fineness under 20 microns, and, for at least 50% in weight, with fineness under 10 microns.

The fluid suspensions thus obtained , according to the invention, are particularly suitable for use in the fight against parasites, in some cases in their present state, but generally after dilution in suitable quantities of water for a subsequent improved dusting or pulverization, by means of conventional equipment operating on the ground, or even with aerial means.

These fluid suspensions according to the invention are particularly useful for selective deweeding of various crops (e.g. maize, sorgo, soya, beans, wheat, barley, rice, sunflowers, colza etc.), using 0.5 to 10 kg/ha of active substances to totally deweed the uncultivated areas, using 2 to 40 kg/ha of active substances.

The following examples illustrate the invention more fully, without limiting its possible uses.

Example 1

In a mixer for fluids, suitable for the preparation of herbicides in paste, the substances shown in the following formulae, in which the active substance Alachlor is present in solution and Atrazina is in suspension, are mixed.

|  | Formula 1 | Formula 2 | Formula 3 | Formula 4 | Formula 5 |
|---|---|---|---|---|---|
| Atrazine tec.95% powder | 12.2 kg. | 12.2 kg. | 12.2 kg. | 20.0 kg. | 14.3 kg. |
| Alachlor tec. 95% | 28.5 kg. | 28.5 kg. | 28.5 kg. | 22.1 kg. | 33.7 kg. |
| Soitem 150 | 5.0 kg. | 5.0 kg. | 5.0 kg. | 5.5 kg. | — |

| | | | | | |
|---|---|---|---|---|---|
| Soitem 960 | 5.0 kg. | 5.0 kg. | 5.0 kg. | 5.5 kg. | - |
| Soitem 999 | - | - | - | - | 2.5 kg. |
| Soitem 101 | - | - | - | - | 7.5 kg. |
| Aerosil R 972 | 3.0 kg. | - | - | 2.5 kg. | 5.0 kg. |
| Wacker HDK N 20 E | - | - | 2.5 kg. | - | - |
| Bentone 38 | - | 1.0 kg. | - | - | - |
| Aerosil 200 | - | 1.5 kg. | - | - | - |
| Ethyl Alcohol 95° | - | 0.3 kg. | - | - | - |
| Solvesso suff. for 200 | 100 kg. | 100 kg. | - | 100kg | - |
| Shell Sol suff. for AB | - | - | 100 kg. | - | - |
| Cyclo- suff. hexanone | - | - | - | - | 100 kg. |

Fluid suspensions are obtained which , after being milled in a pearl mill, have 100% of the solid particles in suspension under 15 microns and 50% under 8 microns, particularly suitable for distribution, after being diluted in water, as selective herbicides for maize, through use in preparation of the ground for sowing, in pre-emergency and in premature post-emergency of the crop.

Example 2

The undermentioned substances are mixed in a mixer for fluids suitable for use with selective herbicides, bearing in mind that the active substance Trifluralin remains in solution while the substance Neburon remains in suspension.

|                      | Formula 6 | Formula 7 | Formula 8 |
|----------------------|-----------|-----------|-----------|
| Neburon tec. 95%     | 20.0 kg.  | 20.0 kg.  | 25.3 kg.  |
| Trifluralin Tec. 95% | 10.0 kg.  | 10.0 kg.  | 12.7 kg.  |
| Soitem 101           | 4.0 kg.   | -         | 4.0 kg.   |
| Soitem 999           | 1.0 kg.   | -         | 1.0 kg.   |
| Texan L 250          | 10.0 kg.  | -         | 10.0 kg.  |
| Atlas EL 522         | -         | 6.0 kg.   | -         |
| Atlas EL 523         | -         | 6.0 kg.   | -         |
| Aerosil R 972        | 1.0 kg.   | -         | -         |
| Aerosil COK 84       | -         | 0.8 kg    | -         |
| Wacker HDK N 20 E    | -         | -         | 1.5 kg.   |
| Cyclohexanone        | 5.0 kg.   | 10.0 kg.  | -         |
| Solvesso 200 suff. for | 100 kg. | 100 kg.   | 100 Kg.   |

Fluid suspensions are obtained according to the invention, which after being milled in a colloidal pearl mill, have 100% of the solid particles in suspension under 20 microns and 50% under 10 microns, particularly suitable, after dilution in water, for selective deweedings of wheat and barley by means of treatments in pre-emergency.

- 8 -                                          0149459

## CLAIMS

1) Stabilized fluid suspension of Chlorotriazine and/or Urea substitute herbicides in unchlorinated organic solvents, possibly containing Acetanilides and/or herbicide substituted Ureas, besides emulsifiers and dispersants, stabilized by the addition of treated micronized silica, possibly adjuvated by organophilic bentonites.

2) Composition as in 1), wherein the micronized silica have undergone physical treatment.

3) Composition as in 1) and 2), wherein the micronized silica have been treated at high temperature.

4) Composition as in 1), wherein the micronized silica have undergone chemical treatment.

5) Composition as in 1) and 4), wherein the micronized silica have been hydrated.

6) Composition as in 1) to 5), wherein the emulsifying/suspending agents have a base of polyethoxylated alkylphenols mixed with dodecylbenzensulphonates.

7) Composition as in 1) to 5), wherein the emulsifying/suspending agents have a base of polyethoxylated castor oil mixed with dodecylbenzensulphonates.

8) Composition as in 1) to 7), wherein the organic solvents used are aromatic hydrocarbons with boiling point between 100 and 300°C.

9) Composition as in 1) to 7), wherein the organic solvents used are aliphatic hydrocarbons with boiling point between 90 and 400°C.

10) Composition as in 1) to 7), wherein the organic solvents used are vegetable oils.

11) Composition as in 1) to 7), whrein the organic solvents are aliphatic, aromatic or heterocyclic ketones.

12) Composition as in 11), wherein the aliphatic ketone is cyclohexanone.

13) Composition as in 1) to 7), wherein the organic solvents are aliphaticesters.

14) Composition as in 1) to 7), wherein the Chlorotriazine is Atrzina and the Acetanalide is Alachlor.

15) Composition as in 1) to 13), wherein the chlorotriazine is atrazina and the Acetanilide is Acetachlor.

16) Composition as in 1) to 13), wherein the substituted Urea is Neburon and the Nitroanaline is Trifluralin.

17) Composition as in 1) to 13), in which the substituted urea is Metabenzthiazuron and the Nitroanaline is Trifluralin.

18) Preparation process of a compositon as in 1) to 17), by mixing the active substances, solvents and adjuvants, then passing the fluid mixture in a pearl mill until 100% of the solid particles has a diameter of under 20 microns, and 50% of the solid particles has a diameter of under 10 microns.

19) Preparation process as in claim 1) to 18), wherein 100% of the solid particles is under 15 microns and 50% under 8 microns.

20) Method of use of the fluid suspension of antiparasitics as in 1) to 19), where it is such that, after dispersion in water by means of dusting or pulverization with conventional means operating from the ground or with aerial means, for selective deweeding of various crops, using 0.5 to 10 Kg/ha of active substances, or for total deweeding of uncultivated areas using 2 to 40 kg/ha of active substances.